# EUROPEAN PATENT APPLICATION

(11) **EP 3 153 313 A1**
(43) Date of publication of application: **12.04.2017**
(21) Application number: 16187875.6
(22) Date of filing: 08.09.2016
(51) Int. Cl.: B32B 7/12, B32B 27/08, B32B 27/32, B32B 27/36, B32B 3/28, B01D 71/06, B01D 39/00

(54) **FILTER MEDIUM**

(30) Priority: 06.10.2015 DK 201500613
(71) Applicant: JP Air Tech ApS, 4900 Nakskov (DK)
(72) Inventor: Poulsen, Jørgen, 4900 Nakskov (DK)
(74) Representative: Larsen & Birkeholm A/S

(57) **Abstract**

By, according to the invention, manufacturing a filter cloth (5, 6) especially to be used in filtering of gas flows, which filter is manufactured in a rolling mill where the individual layers are laminated with a membrane layer (1), to which by the use of a binder (2), such as thermoplastic sheeting, is glued a filter layer (4) with at least one metal layer (3, 13). Hereby is achieved a robust laminate (5, 6), which is, in addition, easy to manufacture in a rolling mill with heated rollers for melting of the binder (2).

## Description

### Prior Art

The present invention relates to a filter medium especially a filter cloth for removal of particles from gas flows such as air, smoke and residual gasses, which medium comprises a gas permeable laminate, method for manufacture and use.

Removal of particles from gas flows is an important element, partly by controlling the emission of noxious particles and partly by capturing particles, possibly for the purpose of reusing.

Known in the art are filtering medias built around a PTFE film layer, which functions as a membrane, on which on either side or both sides is glued a filtering material using liquid glue.

However, this filter medium is not very robust as the glue is unable to tie the layers sufficiently, so that just a slight impact may cause damage to the medium and thereby destroy its filtering ability.

Dust separation usually takes place in bag filter elements, filter elements with a specified porosity. However, there is a tendency to create an electrostatic field in the filter which may pose a risk of personal injury and fire, explosion hazard.

To remedy this are prior art filter media with inlaid metal layers, which can be electrically grounded/frame grounded for discharge/removal of this electrostatic current through the metal layer.

An example of such a prior art medium is US 4,531,957 which comprises a perforated laminate (30) consisting of a perforated plastic sheeting (32), which is fitted with a surface layer (34) of a metal coating, e.g. of aluminium.

The disadvantage of this metalized filter medium is partly that the metal layer requires perforation to become gas permeable and partly that it is unprotected and thus exposed to damage by handling, assembly.

This of course reduces the conductive effect and thereby the electrostatic discharge, which is either interrupted or at least has only partial discharge.

### Object of the invention

It is the object of the invention to improve the filter medium to achieve the best possible filtering efficiency without the risk of delaminating the medium or damaging the surface.

This is achieved according to the invention by a filter medium where the laminate consists of a membrane layer to which the filtering material is glued using a thermoplastic binder such as a polyester sheeting.

In this surprisingly simple way is achieved a robust medium, as well as a simplification of the manufacture, as the binder is activated during the heating and compression in the same operation in a rolling mill. Hereby is achieved a manufacturing simplification, as the binder only becomes liquid when the layers are in their right relative positions.

By, as described in claim 2, having the laminate consisting of a membrane layer to which is glued a filtering material with a metal layer, is achieved an efficient discharge, as the metal layer is protected and thereby ensures that this metal layer is not directly exposed, as well as the layer having an appropriate gas permeability.

By, as described in claim 3, gluing an additional metal layer on the outside, additional electrical discharge is ensured as the metal layer in a simple way can establish contact between the metal layer and the frame/ground.

By, as described in claim 4, using a corrugated laminate the gas permeation can be ensured, as the binder primarily will adhere to wave crests and thereby leaves channels for the gas permeation.

By using the method described in claim 5, the medium can be manufactured at a low production cost and in well-known manufacturing equipment.

Finally, a filter medium, as described in claim 6, is suitable for filtering of particles down to 0.1 µm.

### The drawing

Examples of embodiments of laminates according to the invention will be described in detail in the following with reference to the drawing where
figure 1 shows a sectional drawing of a non-conductive filter medium, and
figure 2 shows a sectional drawing of a conductive filter medium

### Description of an example of embodiment

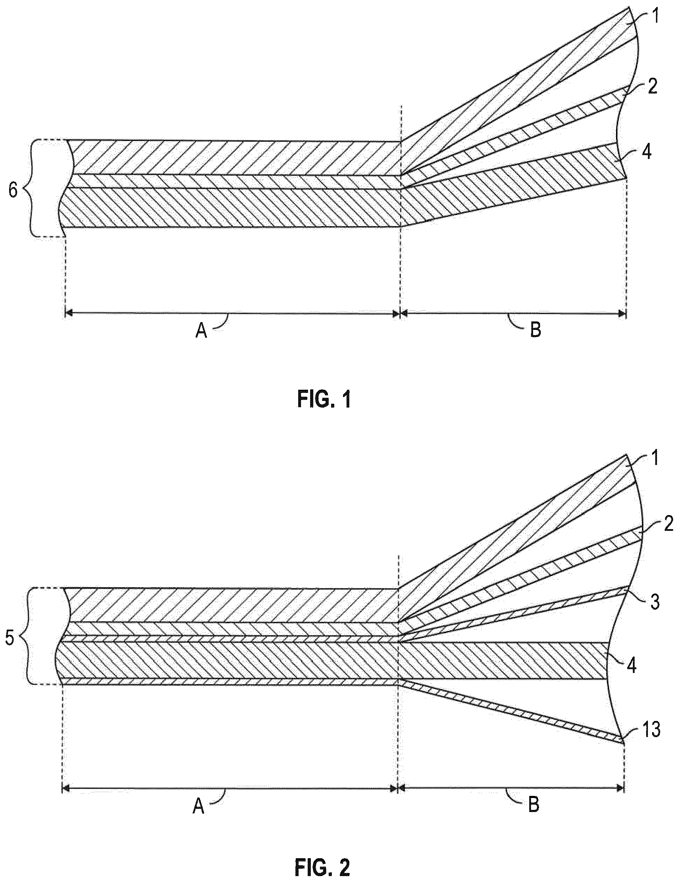

An example of a filter medium according to the invention is shown in the sectional drawing in figure 1, section A, while the single layers are shown in section B.

The membrane layer 1 is usually of a certain PTFE sheeting, on which the filter layer 4 is glued using a binding layer 2, which according to the invention consists of a polyester sheeting, which is thermoplastic.

In the manufacture of this medium in a rolling mill, the binder layer 2 can be made liquid at the same time as the rollers compress the laminate.

This medium is very robust and will not as easily be damaged, thus ensuring a uniform filtering ability.

In figure 2 is shown an example of a filter medium with a filtering material 4 with one or two metal layers 3,13, which are adhered to the filtering material, which layers 3, 4, 13 comprise the filtering material and the statically charged metal coating 3, 13.

Where there is no need for the outer metal layer 13, this can of course be omitted.

The metal layer can preferably consist of aluminium in the form of aluminium powder of the size of 200 microns, which by means of a vacuum are sucked firmly to the filtering material.

As shown in section B this laminate comprises a membrane 1, which for example can be a PTFE sheeting. This membrane 1 comprises the membrane layer in the laminate 5, so that the strength and gas permeation qualities of the cloth can be dimensioned accordingly.

Hereafter follows a binder layer 2, which consists of a thermoplastic polyester sheeting. The purpose of this binder layer is to adhere the filtering material 3, 4, 13 to the membrane 1.

The metal layer 3 consists of, for example, a more or less porous aluminium layer in the form of aluminium powder, which may be corrugated, i.e. wave shaped, in appropriate parallel waves. The wave length could, for example, be 5 mm and the wave height around 1 mm.

As the metal layer is appropriately porous the gas permeation is thus securely kept at the desired level.

If an outer metal layer 13 is needed, an outer metal layer 13 can, as previously explained, be coated.

The manufacture of the medium is done with a heated rolling to ensure melting of the polyester sheeting 2, where the layers are assembled to form the finished laminate 5 shown in section B, which comprises the filter medium.

The laminate can be manufactured for filtering of particles dependent on the gas permeation of the individual layers, porosity.

Furthermore, it will be suitable for dust separation of particles down to 0.1µm.

As the laminate can be manufactured using prior art technology and in prior art rolling mills, it can be manufactured at very competitive production costs, since no further extraordinary expensive components are included.

## Claims

1. Filter medium, especially a filter cloth for removal of particles from gas flows such as air, smoke and residual gasses, which medium comprises a gas permeable laminate **characterized in that** the laminate (5,6) consists of a membrane layer (1), to which the filtering material (4) is glued using a thermoplastic binder (2) such as a polyester sheeting.

2. Filter medium, according to claim 1, **characterized in that** the laminate (5) consists of a membrane layer (1) to which is glued a filtering material (4) with a metal layer (3).

3. Filter medium, according to claim 2, **characterized in that** a further metal layer (13) is glued to the outer part of the filtering material (4).

4. Filter medium, according to claims 2 and 3, **characterized in that** the laminate (5) is corrugated, wave shaped.

5. Method for manufacturing of the in claims 1-4 described filter medium, **characterized in that** between the individual layers (1, 3, 4, 13) is applied a thermoplastic polyester layer (2), which upon heating to the melting point is rolled with the layers to form the cloth (5, 6).

6. Use of the in claims 1-4 described filter medium **characterized in that** the medium (5, 6) is used in filters for filtering particles down to 0.1 µm.
